# EUROPEAN PATENT SPECIFICATION

(11) **EP 1 509 028 B1**
(45) Date of publication and mention of the grant of the patent: **26.04.2006**
(21) Application number: 04018639.7
(22) Date of filing: 05.08.2004
(51) Int. Cl.: H04M 1/73, H04M 1/725

(54) **Mobile phone, power saving method for use in the same and program therefor**
Mobiltelefon und dazugehöriges Energiesparverfahren und Computerprogramm
Téléphone mobile utilisant un procédé d'économie d'énergie et procédé et programme correspondants

(30) Priority: 20.08.2003 JP 2003295760
(43) Date of publication of application: 23.02.2005
(73) Proprietor: NEC CORPORATION, Tokyo (JP)
(72) Inventor: Osumi, Fumihiro, c/o NEC Access Technica Ltd., Shizuoka Tokyo (JP)
(74) Representative: Vossius & Partner

(56) References cited:
- EP-A- 1 185 104
- US-A1- 2001 029 196
- US-A1- 2003 020 700
- PATENT ABSTRACTS OF JAPAN vol. 2003, no. 11, 5 November 2003 (2003-11-05) & JP 2003 189007 A (NEC CORP), 4 July 2003 (2003-07-04)
- PATENT ABSTRACTS OF JAPAN vol. 1999, no. 12, 29 October 1999 (1999-10-29) & JP 11 184576 A (MATSUSHITA ELECTRIC IND CO LTD), 9 July 1999 (1999-07-09)
- PATENT ABSTRACTS OF JAPAN vol. 2000, no. 22, 9 March 2001 (2001-03-09) & JP 2001 136423 A (KYOCERA CORP), 18 May 2001 (2001-05-18)

## Description

The present invention relates in general to a mobile phone, a power saving method for use in the same and a program therefor, and more particularly to a power saving method in a mobile phone.

In recent years, various functions such as a digital camera function and a television-phone function have been added to a mobile phone. Thus, the power consumption of the mobile phone has increased, and hence various power saving methods have been proposed in order to cope with the increased power consumption.

For the mobile phone having the digital camera function added thereto, there is a method in which when there is no change in data of an image captured with a digital camera, a power supply of the digital camera is turned OFF to suppress wasteful power consumption. For example, there is a method described in JP 2001-136423 A (issued on May 18, 2001) entitled "PORTABLE VIDEO TELEPHONE TERMINAL AND ITS TRANSMISSION METHOD".

In addition, for the mobile phone having the television-phone function added thereto, there is proposed a method in which when the remaining quantity of the battery decreases, the supply of an electric power to any of functions other than a mobile phone radio communication function is stopped, and hence only a mobile phone function operates in order to lengthen a time period of an operation of the mobile phone. For example, there is a method described in JP 11-184576 A (issued on July 9, 1999) entitled "PORTABLE COMMUNICATION TERMINAL WITH TELEPHONE".

However, in the conventional mobile phones as described above, when a television (TV) reception function is added thereto, the power consumption during a TV viewing mode becomes a problem. Since the mobile phone operates on the assumption of a battery-powered condition, there arises a problem in that a call waiting possible time and a call possible time are shortened due to the power consumption during the TV viewing mode.

JP-A-2003-189007 discloses a mobile phone according to the preamble of claim 1.

In the light of the foregoing, the present invention has been made in order to solve the above-mentioned problems associated with the prior art, and it is, therefore, an object of the present invention to provide a mobile phone in which the power consumption during a TV viewing mode can be reduced, a power saving method for use in the same and a program therefor.

This object is achieved with the features of the claims.

That is to say, for the mobile phone of the present invention, there is provided a method of reducing power consumption when the mobile phone provided with a function of receiving a TV broadcast program is in the TV viewing mode. Note that the TV viewing mode means a mode in a state in which a user can view and listen to a TV picture and a TV audio output, respectively.

When the mobile phone of the present invention stops an operation of the mobile phone radio communication circuit, it is judged that this case is managed in the same manner as that when a power supply of the mobile phone is in a turn-off state, or the mobile phone is located in a place which an electric wave for mobile radio communication does not reach. Even when the mobile phone during the TV viewing mode receives a voice incoming call, the mobile phone is not connected to a base transceiver station, and hence an announcement of call impossibility is made for an originating side(caller side) by the base transceiver station.

In addition, similarly, when the mobile phone of the present invention receives an e-mail incoming call, the e-mail is archived in a server of corresponding one of communication carriers. In this case, a user can turn on the power supply to receive the e-mail thus archived. In addition, after the user moves to a place where the electric wave reaches, the user can make an inquiry to the server about whether or not there is an e-mail to thereby receive the e-mail thus archived.

The mobile phone of the present invention is provided with a setting function of switching an operation mode of the mobile phone radio communication circuit during the TV viewing mode over to another one on the basis of the remaining quantity of the battery. When the remaining quantity of the battery is sufficient during the TV viewing mode, the mobile phone radio communication circuit continues to operate while being kept in a call waiting state, and hence response to the voice incoming call, reception of an e-mail, and the like become possible.

In addition, when the remaining quantity of the battery becomes for example, less than 2/3 during the TV viewing mode, the mobile phone of the present invention displays such a message that the remaining quantity of the battery is less. Moreover, the mobile phone of the present invention displays a message related to whether or not the operation mode should proceed to a "power cut mode". The "power cut mode" is a mode in which the supply of an electric power from the battery to the mobile phone radio communication circuit is cut. An operation mode of the mobile phone of the present invention proceeds to the power cut mode, whereby no electric power is consumed in the mobile phone radio communication circuit. Consequently, in the mobile phone of the present invention, the power consumption during the TV viewing mode can be reduced, and hence a TV viewing possible time can be lengthened. It should be noted that in the mobile phone of the present invention, during the "power cut mode", the response to the voice incoming call, and the reception of the e-mail become impossible.

In addition, in the mobile phone of the present invention, during the "power cut mode" and also the TV viewing mode as well, the reception of the e-mail is possible. When a control circuit of the mobile phone of the present invention detects that a TV program is shifted to a TV commercial (hereinafter, referred to as "CM" for short) message during the "power cut mode" and also the TV viewing mode, the control circuit turns on the supply of an electric power to the mobile phone radio communication circuit to thereby release the "power cut mode" once.

Thereafter, the control circuit makes an inquiry to the server about whether or not there is the e-mail incoming call during the TV viewing mode (during the power cut mode) . When there is no e-mail incoming call, the control circuit makes the operation mode to proceed to the "power cut mode" again to continue the TV viewing mode. On the other hand, when there is an e-mail incoming call, the control circuit receives the e-mail archived in the server to display such a message that the e-mail reached. Thereafter, the control circuit makes the operation mode to proceed to the "power cut mode" again to continue the TV viewing mode.

When the remaining quantity of the battery is reduced during the TV viewing mode, the operation mode of the mobile phone of the present invention proceeds to the "power cut mode" to thereby reduce the power consumption. Moreover, the mobile phone of the present invention receives the e-mail reached during the "power cut mode" and also the TV viewing mode with a delay short as much as possible.

With the above-mentioned configuration and operation according to the mobile phone of the present invention, there is obtained an effect that the power consumption during the TV viewing mode can be reduced.

These and other aspects, features and advantages of the invention will become more fully apparent from the following detailed description taken in conjunction with accompanying drawings. In the drawings:
FIG. 1 is a block diagram showing a configuration of a mobile phone according to an embodiment of the present invention;
FIG. 2 is a flow chart showing an operation of the mobile phone according to an embodiment of the present invention;
FIG. 3 is a flow chart showing the operation of the mobile phone according to the embodiment of the present invention; and
FIG. 4 is a flow chart showing an operation for an e-mail incoming call in a TV viewing mode in a power cut mode according to an embodiment of the present invention.

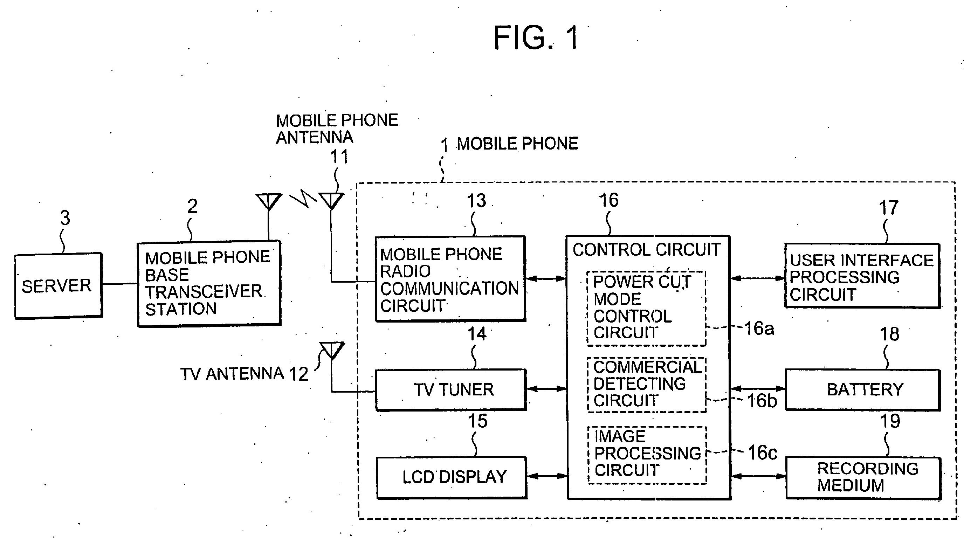

Embodiments of the present invention will hereinafter be described in detail with reference to the accompanying drawings. FIG. 1 is a block diagram showing a configuration of a mobile phone according to an embodiment of the present invention. Referring to FIG. 1, a mobile phone 1 includes a mobile phone antenna 11, a television (TV) antenna 12, a mobile phone radio communication circuit 13, corresponding to a mobile communication circuit a TV tuner 14, a liquid crystal display (LCD) display 15, a control circuit 16, a user interface processing circuit 17, a battery 18, and a recording medium 19. The mobile phone 1 is connected to a server 3 through a mobile phone base transceiver station 2.

The mobile phone antenna 11 is an antenna for transmitting/receiving a mobile communication radio signal. The TV antenna 12 is an antenna for receiving signals of TV broadcast programs. The mobile phone radio communication circuit 13 executes the signal processing such as demodulation of a reception signal and modulation of a transmission signal. The TV tuner 14 is a TV reception circuit having a function of detection of a signal from the TV antenna 12. The LCD display 15 is a display device for carrying out display for a TV function as well as a mobile communication function. Note that the mobile communication function=is a function including voice phone communication and e-mail communication. In addition, the TV function is a function including TV broadcast reception, TV image display, and TV voice output. The control circuit 16 generalizes the operation of the mobile phone 1. The user interface processing circuit 17 includes keys and switches, and serves to transmit an instruction from a user to the mobile phone 1 through a manipulation made by the user. The battery 18 supplies an electric power to the mobile phone 1. The recording medium 19 stores therein a program to be executed by the control circuit 16 (a program executable in a computer) .

The control circuit 16 includes at least a power cut mode control circuit 16a, a commercial (CM) detecting circuit 16b, and an image processing circuit 16c. Here, the power cut mode control circuit 16a controls the supply of the electric power to the mobile phone radio communication circuit 13: The CM detecting circuit 16b detects the TV signals of which are being received is a CM message. The CM message is detected on the basis of the fact that a TV voice signal is a stereo signal, the luminance is abruptly changed, logo exists therein, and so forth. The image processing circuit 16c processes a TV reception signal to output the resultant signal to the LCD display 15.

The "power cut mode" means a mode in which the supply of the electric power from the battery 18 to the mobile phone radio communication circuit 13 is cut. The operation mode proceeds to the power cut mode, whereby no electric power is consumed in the mobile phone radio communication circuit 13. As a result, the power consumption during the TV viewing mode can be reduced, and a TV viewing possible time can be lengthened. The mobile phone 1 during the "power cut mode" cannot carry out the response to the voice incoming call and the reception of an e-mail.

When a user manipulates the user interface processing circuit 17 to select the "TV viewing mode", the control circuit 16 activates the TV tuner 14 to start the reception of signals of a TV broadcast program. Here, the control circuit 16 monitors the remaining quantity of the battery 18. When the results of the monitoring show that the remaining quantity of the battery is less than 2/3, the control circuit 16 instructs the LCD display 15 to display thereon such a message that the remaining quantity of the battery is less. Moreover, the control circuit 16 instructs the LCD display 15 to display thereon a message related to whether or not the operation mode should proceed to the "power cut mode" .

When the user selects on the user interface processing circuit 17 that the operation mode proceeds to the "power cut mode", the power cut mode control circuit 16a cuts the supply of an electric power to the mobile phone radio communication circuit 13. As a result, the mobile phone 1 becomes a power saving state. During the "power cut mode" and also the TV viewing mode, if the TV broadcast program is shifted to the CM message, the CM detecting circuit 16b detects this shift. Here, the power cut mode control circuit 16a turns on the supply of the electric power to the mobile phone radio communication circuit 13. Subsequently, the control circuit 16 controls the mobile phone radio communication circuit 13 and transmits an inquiry to the server 3 about whether or not there is an e-mail incoming call during the TV viewing mode (during the power cut mode) .

When there is no e-mail incoming call, the control circuit 16 cuts the supply of the electric power to the mobile phone radio communication circuit 13 to continue the "power cut mode" and also the TV viewing mode. On the other hand, when there is the e-mail incoming call, the control circuit 16 starts to receive the e-mail via the mobile phone radio communication circuit 13. After completion of the reception of the e-mail, the control circuit 16 instructs the LCD display 15 to display thereon such a message that there is the e-mail incoming call. Thereafter, the power cut mode control circuit 16a cuts the supply of the electric power to the mobile phone radio communication circuit 13 again to continue the TV viewing mode in the "power cut mode"

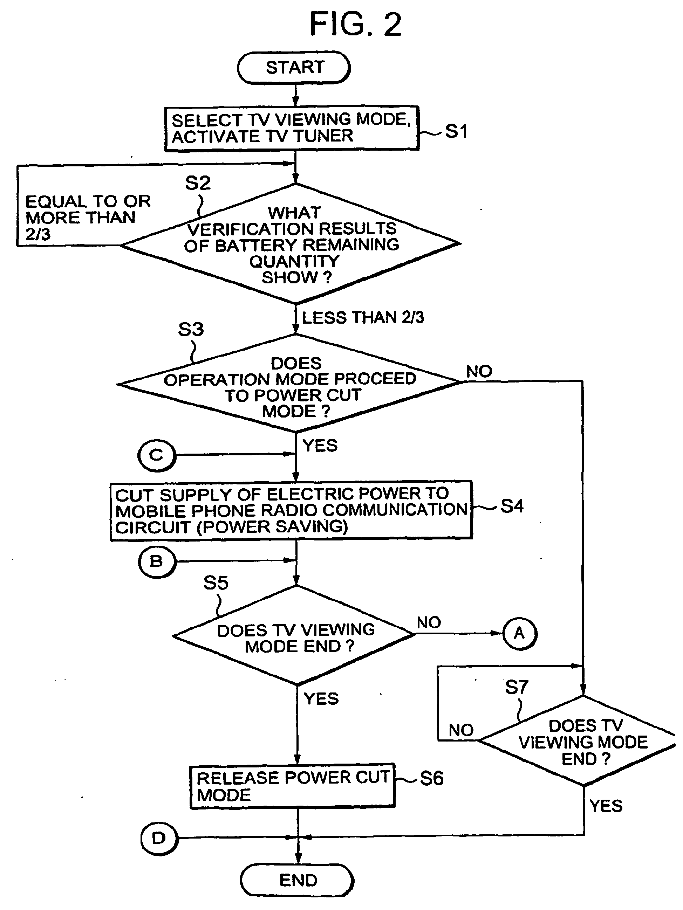

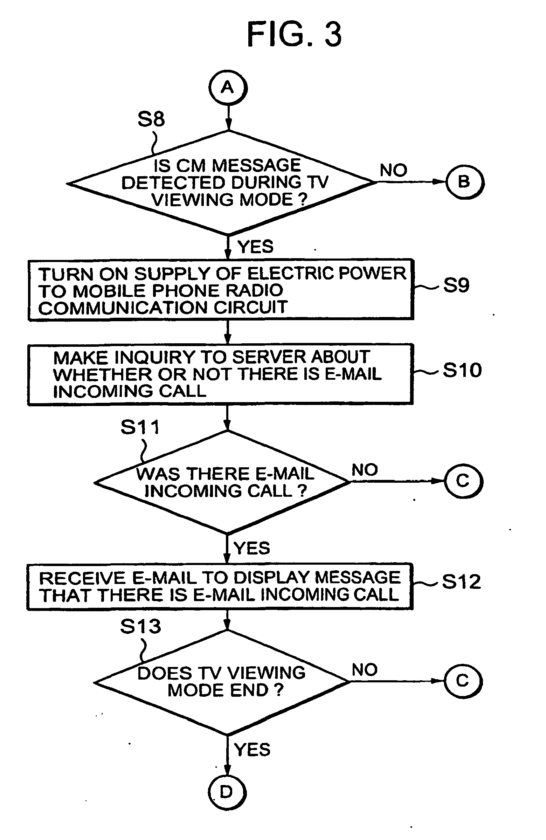

FIGS. 2 and 3 are a flow chart showing an operation of the mobile phone 1 according to an embodiment of the present invention. A description will hereinafter be given with respect to the operation of the mobile phone 1 according to this embodiment of the present invention with reference to FIGS. 1 to 3. Note that it is supposed that this operation is carriedout by a computer circuit of the control circuit 16 on the basis of a program stored in the recording medium 19.

First of all, when the user selects the TV viewing mode, the control circuit 16 activates the TV tuner 14 to start the reception of signals of a TV broadcast program (S1 in FIG. 2). The TV reception signal is processed in the image processing circuit 16c to be outputted in the form of a TV image signal to the LCD display 15. Then, the LCD display 15 displays thereon an image corresponding to the TV image signal. The TV voice signal is outputted through a speaker (not shown). Subsequently, the control circuit 16 verifies the remaining quantity of the battery 18. When the results of the verification show that the remaining quantity of the battery 18 is equal to or more than 2/3 (S2 in FIG. 2), the control circuit 16 continues the TV viewing mode as it is.

On the other hand, when the results of the verification show that the remaining quantity of the battery 18 is less than 2/3 (S2 in FIG. 2), the control circuit 16 instructs the LCD display 15 to display thereon such the message that the remaining quantity of the battery 18 is less. Moreover, the control circuit 16 instructs the LCD display 15 to display thereon the message related to whether or not the operation mode should proceed to the "power cut mode". When the user does not select that the operation mode proceeds to the "power cut mode" (NO in S3), the control circuit 16 continues the TV viewing mode until the user selects the end of the TV viewing mode (S7 in FIG. 3).

On the other hand, when the user selects that the operation mode proceeds to the "power cut mode" (YES in S3), the power cut mode control circuit 16a of the control circuit 16 cuts the supply of the electric power to the mobile phone radio communication circuit 13. As a result, the operation mode of the mobile phone 1 proceeds to the "power cut mode" to provide the power saving state (S4 in FIG. 2). When the user instructs the mobile phone 1 to end the TV viewing mode through the user interface processing circuit 17 (YES in S5 of FIG. 2), the control circuit 16 releases the "power cut mode" (S6 in FIG. 2), and as a result, the operation is returned back to the call waiting state permitting the communication to be carried out as in the past.

On the other hand, when the user continues the TV viewing mode (NO in S5 of FIG. 2), if the CM detecting circuit 16b detects a CMmessage (YES in S8 of FIG. 3), then the power cut mode control circuit 16a of the control circuit 16 turns on the supply of the electric power to the mobile phone radio communication circuit 13 (S9 in FIG. 3). Subsequently, the control circuit 16 carries out the operation for making an inquiry to the server 3 about whether or not there is an e-mail incoming call (S10 in FIG. 3).

When the results of the inquiry about the e-mail incoming call show that there is no e-mail incoming call (NO in S11 of FIG. 3), the control circuit 16 makes the operationmode toproceed to the "power cut mode" again (S4 in FIG. 2) to continue the TV viewing mode. On the other hand, when the results of the inquiry about the e-mail incoming call show that there is an e-mail incoming call (YES in S11 of FIG..3), the control circuit 16 receives the e-mail to instruct the LCD display 15 to display thereon such a message that there is an e-mail incoming call (S12 in FIG. 3). Thereafter, when the user continues the TV viewing mode (NO in S13 of FIG. 3), the control circuit 16 makes the operation mode to proceed to the "power cut mode" again (S4 in FIG. 2) to continue the TV viewing mode.

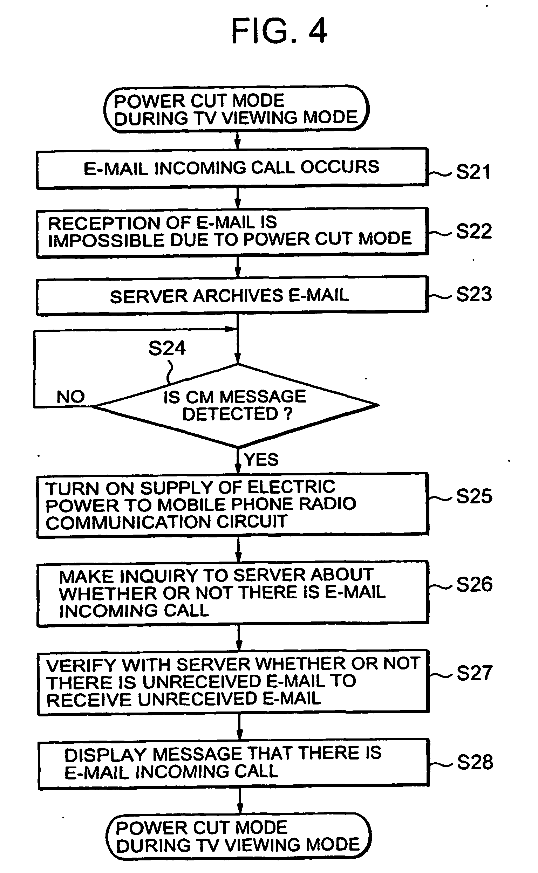

FIG. 4 is a flow chart showing an operation for an e-mail incoming call during the TV viewing mode in the power cut mode according to an embodiment of the present invention. A description will hereinafter be given with respect to the operation for the e-mail incoming call during the power cut mode and also the TV viewing mode according to this embodiment of the present invention with reference to FIGS. 1 and 4.

In a case where an incoming call of an e-mail occurs when the mobile phone 1 is in the power cut mode during the TV viewing mode (S21), since the supply of the electric power to the mobile phone radio communication circuit 13 is cut, the reception of an e-mail is impossible (S22). For this reason, all the unreceived e-mails are archived in the server 3 (S23).

When the CM detecting circuit 16b detects a CM message during the TV viewing mode (YES in S24), the power cut mode control circuit 16a of the control circuit 16 turns on the supply of the electric power to the mobile phone radio communication circuit 13 (S25) to make an inquiry to the server 3 about whether or not there is an e-mail incoming call (S26).

As a result of the inquiry, the control circuit 16 verifies with the server 3 whether or not there is an unreceived e-mail to receive the unreceived e-mail (S27). After completion of the reception of the unreceived e-mail, the control circuit 16 instructs the LCD display 15 to display thereon such a message that there is an e-mail incoming call (S28). Thereafter, the power cut mode control circuit 16a of the control circuit 16 cuts the supply of the electric power to the mobile phone radio communication circuit 13 again. As a result, the operation mode of the mobile phone 1 proceeds to the "power cut mode" to continue the TV viewing mode.

As described above, in this embodiment, the power cut mode control circuit 16a. of the control circuit 16 cuts the supply of the electric power to the mobile phone radio communication circuit 13 during the TV viewing mode. Thereby, the power consumption during the TV viewing mode can be reduced, and hence the operation of the battery can be kept for a longer time period.

In addition, in this embodiment, in order to reduce the power consumption, even when the operation of the mobile phone radio communication circuit 13 is stopped, the mobile phone 1 automatically makes an inquiry to the server 3 about whether or not there is an e-mail incoming call by utilizing a time period of a CM message. Consequently, the mobile phone 1 can shorten a delay time in reception of an e-mail reached during the TV viewing mode, and also can make the power saving function and the mobile phone radio communication function during the TV viewing mode compatible with each other. As a result, in this embodiment, even when the supply of the electric power to the mobile phone radio communication circuit 13 is stopped during the TV viewing mode, the mobile phone 1 can shorten a delay time in reception of an e-mail.

Moreover, in this embodiment, the mobile phone 1 monitors the remaining quantity of the battery 18 to thereby allow a mode corresponding to a degree of the remaining quantity of the battery to be suitably selected.

As for the operation which is carried out when a CM message is detected during the "power cut mode" and also the TV viewing mode, the mobile phone 1 of the present invention cannot only make an inquiry to the server 3 about whether or not there is an e-mail incoming call, but also carry out verification or the like of the sound recording by a verbal message service (including a stay-at-home telephone service). A description will hereinafter be given with respect to an operation when receiving this verbal message service with reference to FIGS. 2 to 4. In S4 of FIG. 2, the control circuit 16 replaces the wording "CUT SUPPLY OF ELECTRIC POWER TO MOBILE PHONE RADIO COMMUNICATION CIRCUIT" with the wording "AFTER SERVER 3 IS INSTRUCTED TO APPLY VERBAL MESSAGE SERVICE, CUT SUPPLY OF ELECTRIC POWER TO MOBILE PHONE RADIO COMMUNICATION CIRCUIT". In S10 of FIG. 3, the control circuit 16 carries out "MAKE INQUIRY TO SERVER ABOUT VOICE DATA" instead of "MAKE INQUIRY TO SERVER ABOUT WHETHER OR NOT THERE IS E-MAIL INCOMING CALL". In S11 of FIG. 3, "WAS THERE VOICE DATA INCOMING CALL?" is used instead of "WAS THERE E-MAIL INCOMING CALL?". In S12 of FIG. 3, "RECEIVE E-MAIL TO DISPLAY MESSAGE THAT THERE IS E-MAIL INCOMING CALL" is replaced with "RECEIVE VOICE DATA TO OUTPUT VOICE". In S21 of FIG. 4, "E-MAIL INCOMING CALL OCCURS" is replaced with "VOICE DATA INCOMING CALL OCCURS". In S23 of FIG . 4, "SERVERARCHIVES E-MAIL" is replaced with "SERVER ARCHIVES VOICE DATA". In S26 of FIG. 4, "MAKE INQUIRY TO SERVER ABOUT WHETHER OR NOT THERE IS E-MAIL INCOMING CALL" is replaces with "MAKE INQUIRY TO SERVER ABOUT WHETHER OR NOT THERE IS VOICE DATA INCOMING CALL". Moreover, in S27 of FIG. 4, "VERYFY WITH SERVER WHETHER OR NOT THERE IS UNRECEIVED E-MAIL TO RECEIVE UNRECEIVED E-MAIL" is changed to "VERIFY WITH SERVER WHETHER OR NOT THERE IS UNRECEIVED VOICE DATA TO RECEIVE UNRECEIVED VOICE DATA". In S28 of FIG. 4, "DISPLAY MESSAGE THAT THERE IS E-MAIL INCOMING CALL" is replaced with "OUTPUT VOICE DATA".

In addition, the mobile phone 1 of the present invention may be provided with an operation interval time setting function of, when during the "power cut mode" and also the TV viewing mode, a time interval between a CM message and a TV program is short, making an inquiry to the server 3 about whether or not there is an e-mail incoming call. The provision of the operation interval time setting function avoids that an inquiry about whether or not there is an e-mail incoming call is repeatedly made, and hence is effective in reduction of the power consumption.

Moreover, the mobile phone 1 of the present invention may also be provided with a setting function of, when during the "power cut mode" and also the TV viewing mode, the TV viewing mode ends before detection of a CM message, making an inquiry to the server 3 about whether or not there is an e-mail incoming call concurrently with end of the TV viewing mode.

Moreover, the mobile phone 1 of the present invention may also be provided with a setting function of, even when during the "power cut mode" and also the TV viewing mode, a CM message is not detected, making an inquiry to the server 3 about whether or not there is an e-mail incoming call through the user interface processing circuit 17 at an arbitrary time instant by a user. For example, during the TV viewing mode, the user can make an inquiry to the server 3 about whether or not there is an e-mail incoming call by depressing any one of the keys.

On the other hand, the mobile phone 1 of the present invention may also be provided with a setting function of usually making the operation mode to proceed to the "power cut mode" without carrying out the judgment of the remaining quantity of the battery during the TV viewing mode. In addition, in the mobile phone 1 of the present invention, in addition to setting of a judgment threshold value for the remaining quantity of the battery during the TV viewing mode to 2/3, the judgment threshold value may be set to 1/2, 1/3 etc.. Moreover, a user may set the judgment threshold value to an arbitrary value.

## Claims

1. A mobile phone comprising:
a television reception circuit (12,14) adapted to receive a television signal; and
a mobile communication circuit (13) adapted to execute a mobile communication; **characterized by**:
a control circuit (16) adapted to cut supply of an electric power to the mobile communication circuit (13) when the television reception circuit is in operation .

2. The mobile phone according to claim 1, wherein the control circuit (16) is adapted to cut the supply of the electric power to the mobile communication circuit (13) when a remaining quantity of a battery (18) becomes less than a predetermined value set in advance.

3. The mobile phone according to claim 1 ot 2 further comprising means for making an inquiry about whether or not there is an iricoming call to the own mobile phone in a time zone when the supply of the electric power to the mobile communication circuit (13) is cut.

4. The mobile phone according to claim 3, wherein the means for making the inquiry is adapted to generate the inquiry when a commercial message is detected from an output of the television reception circuit.

5. The mobile phone according to claim 3, wherein the means for making the inquiry is adapted to generate the inquiry when a television viewing mode ends.

6. The mobile phone according to claim 3, wherein the means for making the inquiry is adapted to generate an inquiry about whether or not there is an e-mail incoming call to the own mobile phone.

7. The mobile phone according to claim 3, 4, 5 or 6, wherein the means for making the inquiry is adapted to verify the sound recording by a verbal message service to the own mobile phone.

8. A power saving method for a mobile phone having a television reception circuit and a mobile communication circuit, **characterized by** the step of:
cutting supply of an electric power to the mobile communication circuit during a TV viewing mode using the television reception circuit.

9. The power saving method according to claim 8, wherein cutting the supply of the electric power to the mobile communication circuit includes making the supply of the electric power to the mobile communication circuit cut, when a remaining quantity of a battery becomes less than a predetermined value set in advance.

10. The power saving method according to claim 8 or 9; further comprising: ,
making an inquiry about whether or not there is an incoming call to the own mobile phone in a time zone when the supply of the electric power to the mobile communication circuit is cut.

11. The power saving method according to claim 10, wherein making the inquiry includes inquiring when a commercial message is detected from an output of the television reception circuit.

12. The power saving method according to claim 10, wherein making the inquiry includes inquiring when a television viewing mode ends.

13. The power saving method according to claim 10, wherein making the inquiry includes inquiring about whether or not there is an e-mail incoming call to the own mobile phone.

14. The power saving method according to claim 10, 11, 12 or 13 wherein making the inquiry includes yerifying whether or not there is sound recording by a verbal message service to the own mobile phone.

15. A computer program for a power saving method for a mobile phone having a television reception circuit and a mobile communication circuit, **characterized in that** :
the computer program comprises code means adapted to perform, when said program is executed on a processor, the process for cutting supply of an electric power to the mobile communication circuit during a TV viewing mode using the television reception circuit.

## Patentansprüche

1. Mobiltelefon mit:
einer Fernsehempfangsschaltung (12, 14), die dazu geeignet ist, ein Fernsehsignal zu empfangen; und
einer Mobilkommunikationsschaltung (13), die dazu geeignet ist, eine Mobilkommunikation auszuführen;
**gekennzeichnet durch**:
eine Steuerschaltung (16), die dazu geeignet ist, eine elektrische Leistungsversorgung der Mobilkommunikationsschaltung (13) zu unterbrechen, wenn die Fernsehempfangsschaltung in Betrieb ist.

2. Mobiltelefon nach Anspruch 1, wobei die Steuerschaltung (16) dazu geeignet ist, die elektrische Leistungsversorgung der Mobilkommunikationsschaltung (13) zu unterbrechen, wenn eine Restkapazität einer Batterie (18) kleiner wird als ein im Voraus gesetzter Wert.

3. Mobiltelefon nach Anspruch 1 oder 2, ferner mit einer Einrichtung zum Erzeugen einer Anfrage, ob in einem Zeitbereich, während dem die elektrische Leistungsversorgung der Mobilkommunikationsschaltung (13) unterbrochen war, ein Anruf für das eigene Mobiltelefon angekommen ist oder nicht.

4. Mobiltelefon nach Anspruch 3, wobei die Einrichtung zum Erzeugen einer Anfrage dazu geeignet ist, die Anfrage zu erzeugen, wenn in einem Ausgangssignal der Fernsehempfangsschaltung Reklame erfasst wird.

5. Mobiltelefon nach Anspruch 3, wobei die Einrichtung zum Erzeugen einer Anfrage dazu geeignet ist, die Anfrage zu erzeugen, wenn ein Fernsehbetrachtungsmodus endet.

6. Mobiltelefon nach Anspruch 3, wobei die Einrichtung zum Erzeugen einer Anfrage dazu geeignet ist, eine Anfrage zu erzeugen, ob eine eMail für das eigene Mobiltelefon angekommen ist oder nicht.

7. Mobiltelefon nach Anspruch 3, 4, 5 oder 6, wobei die Einrichtung zum Erzeugen einer Anfrage dazu geeignet ist zu verifizieren, ob eine durch einen Wortmeldungsdienst bereitgestellte Sprachaufzeichnung für das eigene Telefon vorhanden ist oder nicht.

8. Energiesparverfahren für ein Mobiltelefon mit einer Fernsehempfangsschaltung und einer Mobilkommunikationsschaltung, **gekennzeichnet durch** den Schritt zum Unterbrechen einer elektrischen Leistungsversorgung der Mobilkommunikationsschaltung während eines TV-Betrachtungsmodus, in dem die Fernsehempfangsschaltung verwendet wird.

9. Verfahren nach Anspruch 8, wobei im Schritt zum Unterbrechen der elektrischen Leistungsversorgung der Mobilkommunikationsschaltung die elektrische Leistungsversorgung der Mobilkommunikationsschaltung unterbrochen wird, wenn eine Batterie-Restkapazität kleiner wird als ein im Voraus gesetzter Wert.

10. Verfahren nach Anspruch 8 oder 9, ferner mit dem Schritt zum Erzeugen einer Anfrage, ob in einem Zeitbereich, während dem die elektrische Leistungsversorgung der Mobilkommunikationsschaltung (13) unterbrochen war, ein Anruf für das eigene Mobiltelefon angekommen ist oder nicht.

11. Verfahren nach Anspruch 10, wobei im Schritt zum Erzeugen einer Anfrage eine Anfrage erzeugt wird, wenn in einem Ausgangssignal der Fernsehempfangsschaltung Reklame erfasst wird.

12. Verfahren nach Anspruch 10, wobei im Schritt zum Erzeugen einer Anfrage eine Anfrage erzeugt wird, wenn ein Fernsehbetrachtungsmodus endet.

13. Verfahren nach Anspruch 10, wobei im Schritt zum Erzeugen einer Anfrage eine Anfrage erzeugt wird, ob eine eMail für das eigene Telefon angekommen ist oder nicht.

14. Verfahren nach Anspruch 10, 11, 12 oder 13, wobei im Schritt zum Erzeugen einer Anfrage verifiziert wird, ob eine durch einen Wortmeldungsdienst bereitgestellte Sprachaufzeichnung für das eigene Telefon vorhanden ist oder nicht.

15. Computerprogramm für ein Energiesparverfahren für ein Mobiltelefon mit einer Fernsehempfangsschaltung und einer Mobilkommunikationsschaltung, **dadurch gekennzeichnet, dass**
das Computerprogramm eine Codiereinrichtung aufweist, die dazu geeignet ist, wenn das Programm auf einem Prozessor ausgeführt wird, die elektrische Leistungsversorgung der Mobilkommunikationsschaltung während eines TV-Betrachtungsmodus zu unterbrechen, in dem die Fernsehempfangsschaltung verwendet wird.

## Revendications

1. Téléphone mobile comportant :
un circuit de réception de télévision (12, 14) adapté pour recevoir un signal de télévision, et
un circuit de communication mobile (13) adapté pour effectuer une communication mobile,
**caractérisé par** :
un circuit de commande (16) adapté pour couper une énergie électrique au circuit de communication mobile (13) lorsque le circuit de réception de télévision est en fonctionnement.

2. Téléphone mobile selon la revendication 1, dans lequel le circuit de commande (16) est adapté pour couper l'alimentation de l'énergie électrique au circuit de communication mobile (13) lorsqu'une quantité restante d'une batterie (18) devient inférieure à une valeur prédéterminée définie à l'avance.

3. Téléphone mobile selon la revendication 1 ou 2, comportant en outre des moyens pour effectuer une demande pour savoir si oui ou non il y a un appel entrant dans le téléphone mobile lui-inême dans un fuseau horaire lorsque l'alimentation de l'énergie électrique à un circuit de communication mobile (13) est coupée.

4. Téléphone mobile selon la revendication 3, dans lequel les moyens pour effectuer la demande sont adaptés pour générer la demande lorsqu'un message commercial est détecté depuis une sortie du circuit de réception de télévision.

5. Téléphone mobile selon la revendication 3, dans lequel les moyens pour effectuer la demande sont adaptés pour générer la demande lorsqu'un mode de visualisation de télévision se termine.

6. Téléphone mobile selon la revendication 3, dans lequel les moyens pour effectuer la demande sont adaptés pour générer une demande pour savoir si oui ou non il y a un appel entrant de type message électronique dans le téléphone mobile lui-même.

7. Téléphone mobile selon la revendication 3, 4, 5 ou 6, dans lequel les moyens pour effectuer la demande sont adaptés pour vérifier l'enregistrement sonore par l'intermédiaire d'un service de message verbal dans le téléphone mobile lui-même.

8. Procédé d'économie d'énergie pour une téléphone mobile ayant un circuit de réception de télévision et un circuit de communication mobile, **caractérisé par** l'étape consistant à :
couper l'alimentation d'une énergie électrique au circuit de communication mobile pendant un mode de visualisation TV en utilisant le circuit de réception de télévision.

9. Procédé d'économie d'énergie selon la revendication 8, dans lequel la coupure de l'alimentation de l'énergie électrique au circuit de communication mobile inclut de couper l'alimentation de l'énergie électrique au circuit de communication mobile, lorsqu'une quantité restante d'une batterie devient inférieure à une valeur prédéterminée définie à l'avance.

10. Procédé d'économie d'énergie selon la revendication 8 ou 9, comportant en outre l'étape consistant à :
effectuer une demande pour savoir si oui ou non il y a un appel entrant dans le téléphone mobile lui-même dans un fuseau horaire lorsque l'alimentation de l'énergie électrique au circuit de communication mobile est coupée.

11. Procédé d'économie d'énergie selon la revendication 10, dans lequel l'étape consistant à effectuer la demande inclut de demander lorsqu'un message commercial est détecté depuis une sortie du circuit de réception de télévision.

12. Procédé d'économie d'énergie selon la revendication 10, dans lequel l'étape consistant à effectuer la demande inclut de demander lorsqu'un mode de visualisation de télévision se termine.

13. Procédé d'économie d'énergie selon la revendication 10, dans lequel l'étape consistant à effectuer la demande inclut une demande pour savoir si oui ou non il y a un appel entrant de type message électronique dans le téléphone mobile lui-même.

14. Procédé d'économie d'énergie selon la revendication 10, 11, 12 ou 13 dans lequel l'étape consistant à effectuer la demande inclut de vérifier si oui ou non il y a un enregistrement sonore par l'intermédiaire d'un service de message verbal dans le téléphone mobile lui-même.

15. Programme informatique pour un procédé d'économie d'énergie concernant un téléphone mobile ayant un circuit de réception de télévision et un circuit de communication mobile, **caractérisé en ce que** :
le programme informatique comprend des moyens de code adaptés pour exécuter, lorsque ledit programme est exécuté sur un processeur, le processus destiné à couper l'alimentation d'une énergie électrique au circuit de communication mobile pendant un mode de visualisation TV en utilisant le circuit de réception de télévision.
